# FASCICULE DE BREVET EUROPEEN

(11) **EP 0 354 831 B1**
(45) Date de publication et mention de la délivrance du brevet: **03.03.1993**
(21) Numéro de dépôt: 89402161.7
(22) Date de dépôt: 28.07.1989
(51) Int. Cl.: B65H 15/02, B65G 57/28

(54) **Dispositif pour former des piles de produits**
Vorrichtung zum Bilden von Produktstapeln
Device for forming piles of products

(30) Priorité: 11.08.1988 FR 8810830
(43) Date de publication de la demande: 14.02.1990
(73) Titulaire: OTOR, 75008 Paris (FR)
(72) Inventeur: Serre, Jean-Claude, F-21000 Dijon (FR)
(74) Mandataire: Bonnetat, Christian

(56) Documents cités:
- BE-A- 882 298
- FR-A- 2 330 621
- GB-A- 980 834
- US-A- 1 770 374
- US-A- 1 977 497

## Description

La présente invention concerne un dispositif pour former des piles de produits, qui permet de plus, une fois lesdites piles réalisées, de les disposer sur une zone de dépose appropriée. Ce dispositif est particulièrement destiné, quoique non exclusivement, à constituer des piles de produits notamment en feuille, tels que des flans de carton, des plaques et/ou des panneaux pouvant être réalisés en toute autre matière, c'est-à-dire en matière synthétique, composite, en verre, etc... Tout autre type de produits pourrait, bien entendu, convenir dès l'instant où on désire former une pile de ceux-ci. Par exemple, le dispositif de l'invention peut être utilisé pour constituer des piles boîtes, telles que par exemple des boîtes de produits alimentaires ou de produits détergents. Ces piles de boîtes peuvent ensuite être déposées sur une palette ou à l'intérieur d'un conteneur ouvert, par exemple en carton ondulé.

Par les documents US-A-1 770 374 et BE-A 822 298, par exemple, on connaît déjà un dispositif pour former et transporter des piles de produits, du type comprenant :
- un socle reposant sur une surface de base ;
- un support relié audit socle autour d'un axe d'articulation horizontal, ledit support présentant au moins des première et deuxième surfaces d'appui, orthogonales entre elles et contre lesquelles au moins une pile desdits produits est destinée à venir s'appuyer ; et
- des moyens pour le basculement dudit support par rapport audit socle autour de l'axe d'articulation, ledit support pouvant alors occuper deux positions distinctes, une première position pour laquelle la première surface d'appui est horizontale, la deuxième surface d'appui étant verticale, et, une seconde position basculée, correspondant à la mise en place desdits produits de façon que ceux-ci s'appuient contre les deux surfaces dudit support en formant une pile. Les piles de produits en feuilles sont généralement formées sur une zone de dépose appropriée, telle qu'un magasin de stockage ou un système d'amenée des piles de produits en feuille destiné à alimenter en produits une machine de traitement de ceux-ci. Il est donc nécessaire que les piles formées, reposant sur la zone de dépose, soient rigoureusement verticales pour éviter le basculement des produits constituant chaque pile. De plus, le transfert d'une zone de dépose à une autre desdites piles est souvent problématique, celles-ci devant être fréquemment remises d'aplomb, voire reconstituées.

La présente invention a pour but de permettre la réalisation de piles de produits rigoureusement droites, la mise en place des piles alors formées sur une zone de dépose en conservant leur aplomb, et, par voie de conséquence, le transfert desdites piles d'une zone de dépose vers une autre zone de dépose.

A cet effet, le dispositif du type mentionné ci-dessus est caractérisé, selon l'invention :
- en ce qu'il comporte un transporteur comportant deux voies de réception et de transport desdites piles de produits, parallèles et espacées, entre lesquelles est susceptible de se déplacer ledit socle avec le support ; et
- en ce que la distance d séparant ladite surface de base et la première surface d'appui horizontale, lorsque ledit support occupe la première position, est inférieure à la distance D séparant ladite surface de base et lesdites voies de réception et de transport, de façon qu'une pile de produits, lorsque ledit support passe de ladite seconde position à la première, vienne au contact desdites voies de réception et de transport légèrement avant que le support retrouve sa première position.

Ainsi, grâce à l'invention, les produits, lors de leur chargement sur le support en position basculée, s'appliquent à la fois contre les deux surfaces d'appui orthogonales, lesquelles servent ainsi de référence pour la mise en position desdits produits, ce qui permet d'obtenir une pile de produits rigoureusement droite.

La mobilité du dispositif lui procure alors une large souplesse d'emploi et permet de déposer les piles de produits en divers emplacements. Par ailleurs, puisque la zone de dépose des emplacements est plus haute que celle de la première surface d'appui lorsque le support retourne dans la première position, la pile de produits droite alors formée vient au contact de la zone de dépose légèrement avant que le support retrouve sa première position, ce qui permet ainsi de retirer facilement le dispositif en le reculant, la pile formée étant disposée sur la zone de dépose.

Une application préférentielle du dispositif concerne le domaine de l'emballage, et, plus précisément, la dépose de piles de produits, tels que des flans de carton, sur un transporteur destiné à alimenter en flans une machine de traitement de ceux-ci.

Avantageusement, entre lesdites voies de réception et de transport, sont prévus des rails avec lesquels coopèrent des moyens de roulement montés sur ledit socle.

Ainsi, le dispositif peut se déplacer aisément par rapport au transporteur. Dans une forme préférée de réalisation, chaque voie de réception et de transport étant constituée d'un profilé autour duquel peut tourner une courroie sans fin, chacun desdits rails s'étend parallèlement le long dudit profilé correspondant en y étant fixé.

Par ailleurs, chacune des piles est avantageusement formée sur une palette susceptible d'être disposée sur ladite première surface d'appui du support.

Avantageusement, ladite palette comporte, de plus, au moins une surface d'appui orthogonale à la surface de réception de ladite palette, ladite surface d'appui formant, lorsque la palette est disposée sur la première surface d'appui dudit support, une troisième surface d'appui orthogonale aux première et deuxième surfaces d'appui dudit support.

Ainsi, les produits empilés au fur et à mesure pour former la pile, lorsque ledit support est incliné, se positionnent sur les trois surfaces d'appui lesquelles forment trois surfaces de référence, analogue à un trièdre trirectangle. La pile réalisée est ainsi parfaitement d'aplomb lorsqu'elle est déposée sur la zone de dépose, telle que les voies de réception et de transport d'un transporteur.

Selon une autre caractéristique de l'invention, lesdits moyens pour le basculement dudit support peuvent comprendre un dash-pot relié d'une part, audit socle, et, d'autre part, audit support, et un organe de commande dudit dash-pot.

L'organe de commande est alors avantageusement monté sur une poignée fixée à la deuxième surface d'appui et comprend une vanne pouvant occuper trois positions distinctes, une première position permettant le basculement du support autour de l'axe d'articulation provoquant l'extension dudit dash-pot, une deuxième position verrouillant ledit dash-pot en extension et maintenant ledit support basculé, et une troisième position permettant la rétraction lente dudit dash-pot et le basculement dudit support muni d'une pile de produits de sa seconde position vers sa première position.

Un tel agencement permet ainsi le retour progressif du support, alors chargé d'une pile de produits, de la deuxième position basculée vers la première position.

Avantageusement, l'axe d'articulation horizontal dudit support par rapport audit socle est situé au voisinage de la jonction des première et deuxième surfaces d'appui.

Selon une autre caractéristique de l'invention, le dispositif comporte des moyens de verrouillage susceptibles de coopérer avec ladite surface de base. Ainsi, le dispositif peut être lié à la surface de base lors de la phase de chargement desdits produits et/ou de dépose de la pile alors formée, évitant ainsi les risques de renversement dudit dispositif.

Dans l'application préférentielle précitée, le dispositif comporte des moyens de verrouillage susceptibles de coopérer avec des moyens d'indexage prévus le long des voies dudit transporteur.

Dans une forme préférée de réalisation, lesdits moyens de verrouillage comprennent un levier de commande monté articulé sur la deuxième surface d'appui dudit support et relié, par l'intermédiaire d'une biellette, à au moins un bras monté pivotant autour d'un axe sur ledit socle et présentant un ergot de verrouillage susceptible de venir coopérer avec les moyens d'indexage.

Lesdits moyens d'indexage peuvent être, quant à eux, avantageusement constitués par des pions fixés à au moins l'un desdits profilés du transporteur et en étant régulièrement espacés les uns des autres.

De la sorte, les piles de produits peuvent être disposées sur les voies de réception dudit transporteur à intervalles réguliers les uns des autres.

Les figures du dessin annexé feront bien comprendre comment l'invention peut être réalisée. Sur ces figures, des références identiques désignent des éléments semblables.

La figure 1 représente une vue en plan schématique et partiellement écorchée d'un mode de réalisation avantageux du dispositif selon l'invention associé à un transporteur.

La figure 2 représente une vue du dispositif analogue à la précédente mais montrant les moyens pour le basculement du support par rapport au socle.

La figure 3 représente une vue partielle du dispositif selon la flèche F de la figure 1.

La figure 4 représente une vue partielle du dispositif selon la flèche F1 de la figure 1.

La figure 5 montre une vue agrandie, en coupe, de l'organe de commande des moyens de basculement.

La figure 6 représente le support du dispositif en position basculée autorisant la mise en place desdits produits en pile.

Les figures 7a,7b,7c,7d,7e et 7f illustrent, schématiquement, les différentes phases de fonctionnement du dispositif permettant la mise en place desdits produits en pile, et la dépose de celle-ci sur le transporteur.

Le dispositif 1 selon l'invention, montré sur ces figures, est destiné, dans une application préférentielle, à être associé à un transporteur 2, pour permettre de déposer sur celui-ci des piles de produits en feuille ou analogue.

A titre d'exemple, les produits en feuille peuvent être des flans de carton destinés à alimenter une machine permettant la réalisation d'emballages à partir desdits flans.

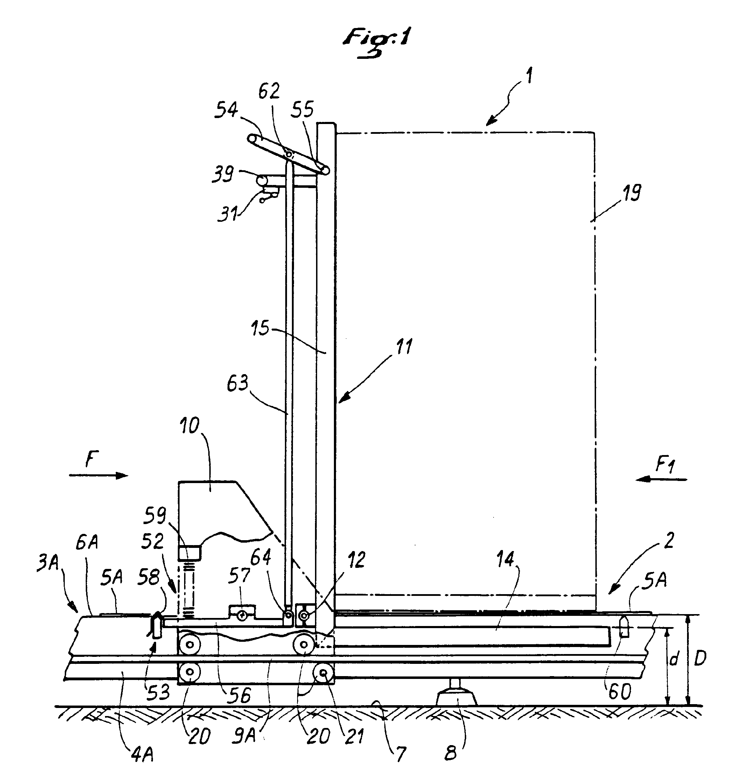

Comme le montrent les figures 1 à 4, le transporteur 2 comporte deux voies 3A et 3B de réception et de transport des piles de produits en feuille vers la machine. Les voies 3A et 3B sont parallèles et espacées, le dispositif 1 étant susceptible de se déplacer entre celles-ci. Brièvement chaque voie 3A et 3B est constituée d'un profilé 4A et 4B ayant une section rectangulaire et autour duquel peut tourner une courroie sans fin 5A et 5B entraînée par l'intermédiaire d'un organe moteur non représenté. Chaque courroie passe à l'intérieur du profilé, en y étant guidée, pour ensuite circuler sur la face supérieure 6A et 6B, respectivement des profilés 4A et 4B. Bien qu'ils ne soient pas illustrés, des moyens pour la synchronisation du déplacement desdites courroies sont également prévus.

De plus, dans l'exemple de réalisation illustré, les voies 3A et 3B du transporteur 2 reposent sur une surface de base, telle qu'un sol 7, par l'intermédiaire de plots 8.

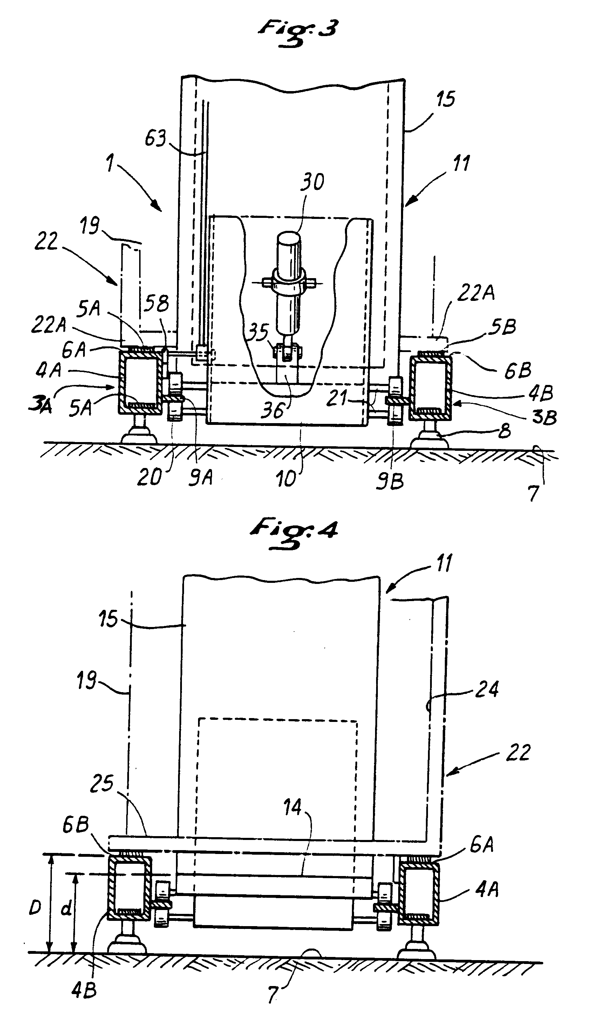

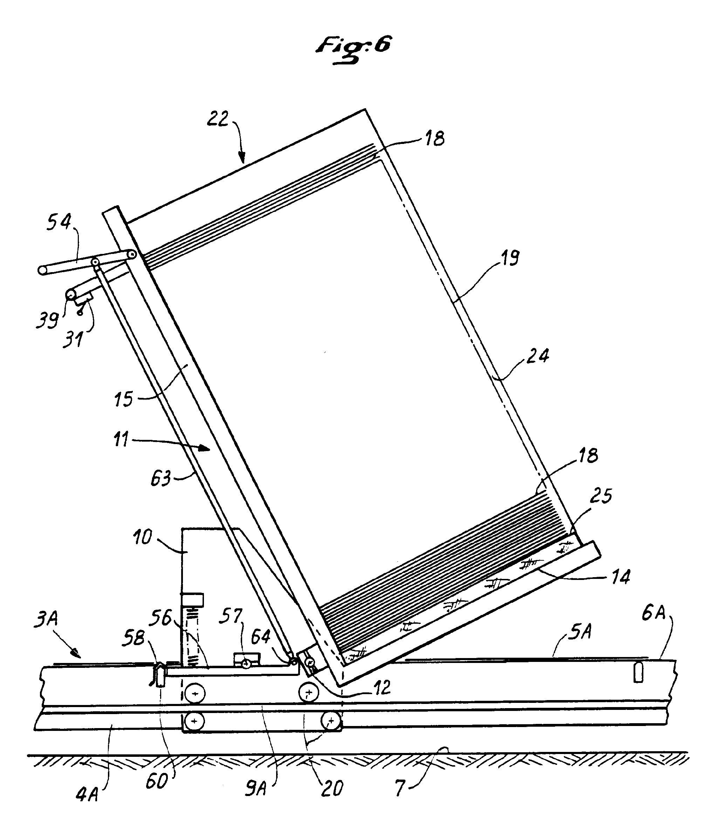

Par ailleurs, on voit, notamment en regard des figures 3 et 4, que chaque profilé 4A et 4B est pourvu d'un rail, respectivement 9A et 9B, s'étendant parallèlement le long du profilé en y étant fixé, les rails permettant le déplacement, comme on le verra ultérieurement, du dispositif 1 le long du transporteur.

Le dispositif 1 pour former des piles de produits, associé dans cette application audit transporteur 2, comprend, selon l'invention, un socle 10, un support 11 relié au socle 10 autour d'un axe d'articulation horizontal 12 et présentant une première, 14, et une seconde, 15, surfaces d'appui orthogonales entre elles, et des moyens 16 pour le basculement du support 11 par rapport au socle 10.

Sur les figures 1 à 4, le support 11 occupe une première position pour laquelle la première surface d'appui 14 est horizontale et parallèle aux voies 3A et 3B du transporteur, tandis que la deuxième surface d'appui 15 est verticale, orthogonale aux voies 3A et 3B. La seconde position du support 11, correspondant à son basculement vers l'arrière autour de l'axe d'articulation horizontal 12, est illustrée en regard de la figure 6. La mise en place des flans de carton 18 s'effectue alors, de façon que ceux-ci s'appuient contre les deux surfaces d'appui du support basculé permettant la réalisation d'une pile 19 des flans parfaitement d'aplomb et destinée à être déposée sur les voies 3A et 3B du transporteur, comme on le verra ultérieurement.

Chaque surface d'appui 14 et 15 peut être formée par un cadre réalisé à partir de longerons et de traverses assemblés les uns aux autres de façon appropriée, une plaque pouvant éventuellement être disposée sur chacun desdits cadres. Ceux-ci peuvent être métallique, en bois, en matière plastique et analogue.

Quant au socle 10, il peut être réalisé à partir d'une tôle, dont les pliages successifs forment ensuite un carter correspondant au socle 10. Ce dernier est destiné à être disposé entre les voies 3A et 3B du transporteur en étant monté sur les rails 9A et 9B. Pour cela, des moyens de roulement, tels que des roulettes 20, sont montés respectivement sur des axes 21 liés aux faces latérales 10A et 10B du socle 10.

En regard des figures 1 à 4, quatre roulettes 20 sont prévues sur chaque face latérale du socle 10, deux des roulettes de chacune des faces 10A et 10B coopérant avec la face supérieure du rail correspondant 9A et 9B, tandis que les deux autres roulettes 20 de chacune des faces 10A et 10B coopèrent avec la face inférieure du rail correspondant 9A et 9B.

Cet agencement permet audit dispositif 1 d'être ainsi convenablement guidé et maintenu par rapport aux voies 3A et 3B du transporteur.

Par ailleurs, comme le montrent ces figures 1 à 4, la distance d séparant le sol 7 de la première surface d'appui 14, lorsque le support 11 occupe la première position, telle qu'illustrée, est inférieure à la distance D séparant ledit sol 7 des faces supérieures 6A et 6B respectivement des voies 3A et 3B, sur lesquelles circulent les courroies, respectivement 5A et 5B, susceptibles de recevoir et de transporter les piles de produits.

Cet agencement est nécessaire pour, d'une part être sûr que les piles de produits reposent sur les voies du transporteur, et d'autre part, reculer le dispositif une fois la pile déposée sur les voies du transporteur.

Par ailleurs, chaque pile de produits est, de préférence, formée sur une palette 22 susceptible d'être disposée sur la première surface d'appui 14 du support 11. Cette palette 22 permet, grâce à sa rigidité, de supporter les produits sur les voies du transporteur, lesquels produits fléchiraient autrement entre les deux voies. La palette 22 a été représentée en traits mixtes sur les figures 1 à 4, puisque celle-ci n'est disposée, de préférence, sur le support que lorsque ce dernier est dans la seconde position basculée, comme le montre la figure 6.

On voit notamment en regard des figures 3 et 4 que la palette 22 présente une largeur supérieure à l'écartement des voies 3A et 3B du transporteur de façon qu'elle vienne au contact par ses parties d'extrémité 22A des courroies 5A et 5B des voies du transporteur, lorsque le support bascule de la seconde position vers la première position.

Avantageusement, la palette 22 comporte, de plus, une surface d'appui 24 orthogonale à la surface de réception 25 définie par la palette. La surface d'appui 24 forme alors une troisième surface d'appui, orthogonale aux première, 14 et deuxième 15, surfaces d'appui du support 11.

Les trois surfaces d'appui 15,25 correspondant à la surface d'appui 14, et 24 forment un référentiel de positionnement lors du chargement des produits, tels que les flans de carton.

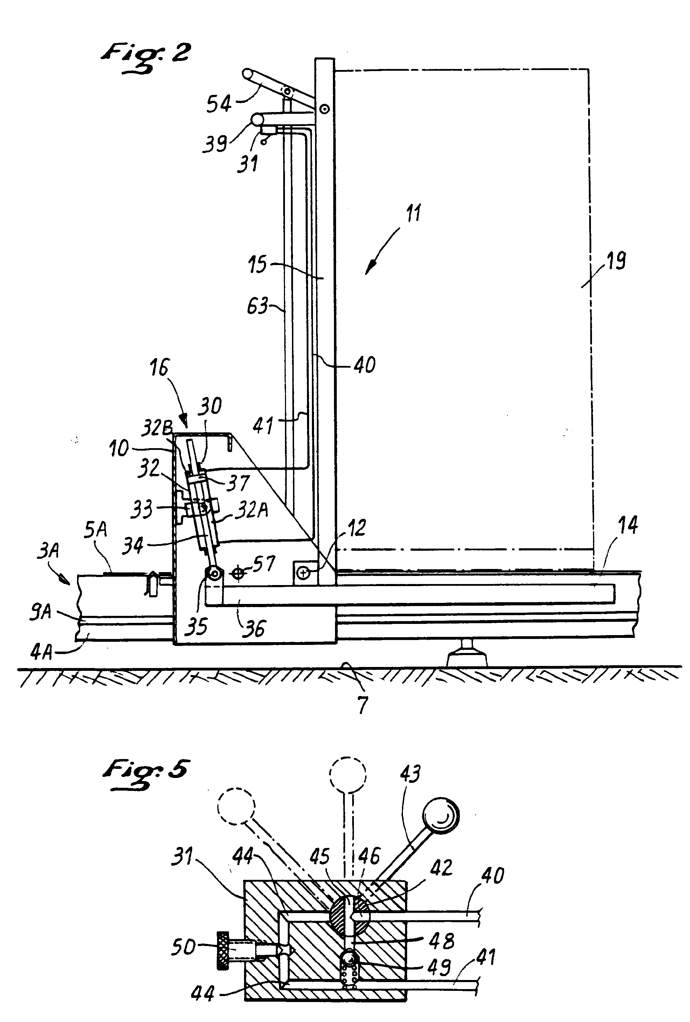

En se référant aux figures 2,3 et 5, on voit que les moyens de basculement 16 comprennent notamment un dash-pot 30 et un organe de commande 31 de celui-ci. Le dash-pot 30 est constitué d'un cylindre 32, relié au socle 10 par l'intermédiaire d'une articulation 33, et, d'une tige 34 susceptible de se déplacer par rapport au cylindre 32 et reliée par un axe d'articulation 35 à une partie en saillie 36 qui prolonge, vers l'arrière, la surface d'appui 14 du support 11. La tige 34 présente une partie élargie 37, formant piston, qui coulisse avec étanchéité dans le cylindre 32 lequel présente ainsi deux chambres 32A et 32B à volume variable selon le déplacement de la tige.

Les axes d'articulation 12,33 et 35 sont horizontaux et parallèles entre eux.

L'organe de commande 31 est monté, par exemple, sur une poignée 39 fixée au voisinage de l'extrémité supérieure de la surface d'appui 15 du support, et, est relié aux chambres 32A et 32B par l'intermédiaire de conduites, respectivement 40 et 41.

L'organe 31, représenté notamment en regard de la figure 5, comporte une vanne 42 qui peut occuper trois positions distinctes de fonctionnement obtenues par une manette 43 d'actionnement de la vanne 42, cette dernière 42 étant disposée dans un passage 44 ménagé dans l'organe et relié, à une extrémité, à la conduite 40 et, à l'autre extrémité, à la conduite 41.

La vanne 42 est pourvue d'un perçage diamétral débouchant 45 et d'un perçage 46 orthogonal au passage 45 et débouchant dans ce dernier.

Comme le montre la figure 5, la vanne 42 occupe une première position qui permet par l'intermédiaire de la poignée 39, le basculement du support 11 dans le sens senestrorsum autour de l'axe 12. Cela provoque la sortie de la tige 34 du dash-pot 30 laquelle s'effectue librement puisque le fluide circule de la conduite 40 vers la conduite 41 en traversant les perçages 46 et 45 de la vanne, puis un passage 48 comportant un clapet anti-retour 49 qui s'ouvre pour laisser passer librement le fluide vers la conduite 41. Les pressions appliquées sur les faces du piston 37 de la tige 34 sont alors sensiblement identiques.

La deuxième position de la vanne 42 correspond à celle pour laquelle les perçages 45 et 46 ne sont plus en regard des passages ménagés dans l'organe. Par conséquent, la vanne obstrue ces passages et le support 11 est alors maintenu bloqué dans sa position basculée correspondant à celle qu'il occupe en regard de la figure 6, permettant l'empilage des produits en feuille.

Enfin, la troisième position de la vanne correspond à celle qu'elle occupe lorsque le perçage diamétral 45 met en communication les conduites 41 et 40 par le passage 44.

Celui-ci comporte une vis d'étranglement 50 permettant de réduire la section du passage 44. Le fluide circulant de la conduite 41 vers la conduite 40 est ainsi freiné par la vis 50, ce qui provoque la rentrée à faible vitesse de la tige 34 dans le cylindre 32 du dash-pot 30. Le retour du support 11, alors chargé d'une pile de produits, s'effectue avantageusement lentement, dans le sens dextrorsum, de sa seconde position basculée vers sa première position.

Par ailleurs, le dispositif 1 comporte des moyens de verrouillage 52 susceptibles de venir coopérer, dans cette application, avec des moyens d'indexage 53 prévus le long des voies 3A et/ou 3B du transporteur 2.

Dans l'exemple de réalisation illustré, les moyens de verrouillage 52 comprennent un levier 54 de commande monté articulé en 55 au voisinage de l'extrémité supérieure de la deuxième surface d'appui 15 du support 11. Le levier de commande 54 est relié par un axe 62 à l'extrémité d'une biellette 63 dont l'autre extrémité est reliée par un axe 64 à un bras 56 monté pivotant autour d'un axe 57 sur la face latérale 10A du socle 10. Les axes 55,62,64 et 57 des moyens de verrouillage sont horizontaux et parallèles entre eux et à l'axe 12. L'extrémité du bras 56 présente un ergot de verrouillage 58 susceptible de coopérer avec les moyens d'indexage 53. De plus, il est prévu un ressort 59 relié au socle 10 et au bras 56 pour permettre de maintenir la position verrouillée, de sorte qu'un effort supérieur à celui fourni par le ressort doit être exercé sur le levier 54 pour provoquer la rotation du bras 56 autour de son axe 57 et désengager ainsi l'ergot 58 des moyens d'indexage.

A ce propos, ces derniers peuvent être avantageusement constitués par des pions 60 fixés à au moins l'un des profilés du transporteur, par exemple, le profilé 4A. Ces pions 60 sont régulièrement espacés les uns des autres le long du profilé, de sorte que les piles de produits réalisées sont déposées à intervalles réguliers sur les voies du transporteur.

Les différentes phases de fonctionnement du dispositif 1, associé au transporteur 2, sont schématiquement illustrées en regard des figures 7a à 7f.

Sur la figure 7a, le support 11 du dispositif occupe la première position préalablement définie. Les moyens de verrouillage 52 sont actionnés par un opérateur, comme l'indiquent les flèches, pour que l'ergot de verrouillage 58 du bras 56 vienne coopérer avec le pion d'indexage correspondant 60. Le dispositif 1 est par conséquent immobilisé en translation sur les profilés du transporteur 2.

En se référant à la figure 7b, l'opérateur pivote dans le sens senestrorsum le support 11 autour de l'axe 12 ; la manette de commande 43 de la vanne 42 dudit organe 31 se trouve dans la première position, permettant ainsi la libre sortie de la tige 34 du dash-pot 30, comme décrit préalablement.

Le support 11 occupe alors la seconde position basculée pour laquelle la surface d'appui 14 est située au-dessus des voies de roulement 3A,3B. L'opérateur actionne la manette 43 de la vanne 42 pour que celle-ci occupe la deuxième position, correspondant au blocage, dans la position basculée, du support.

A ce moment-là, figure 7c, l'opérateur dispose la palette 22 sur le support incliné 11, l'ensemble des surfaces d'appui du support et de la palette formant un référentiel, tel qu'un trièdre trirectangle. L'opérateur met en place, par exemple, les flans de carton 18 sur la surface 25 de la palette de façon que les tranches correspondantes de la pile 19, cours de réalisation, s'appuient contre les surfaces d'appui 15 et 24. On obtient ainsi une pile 19 de produits rigoureusement droite, comme le montre également la figure 6.

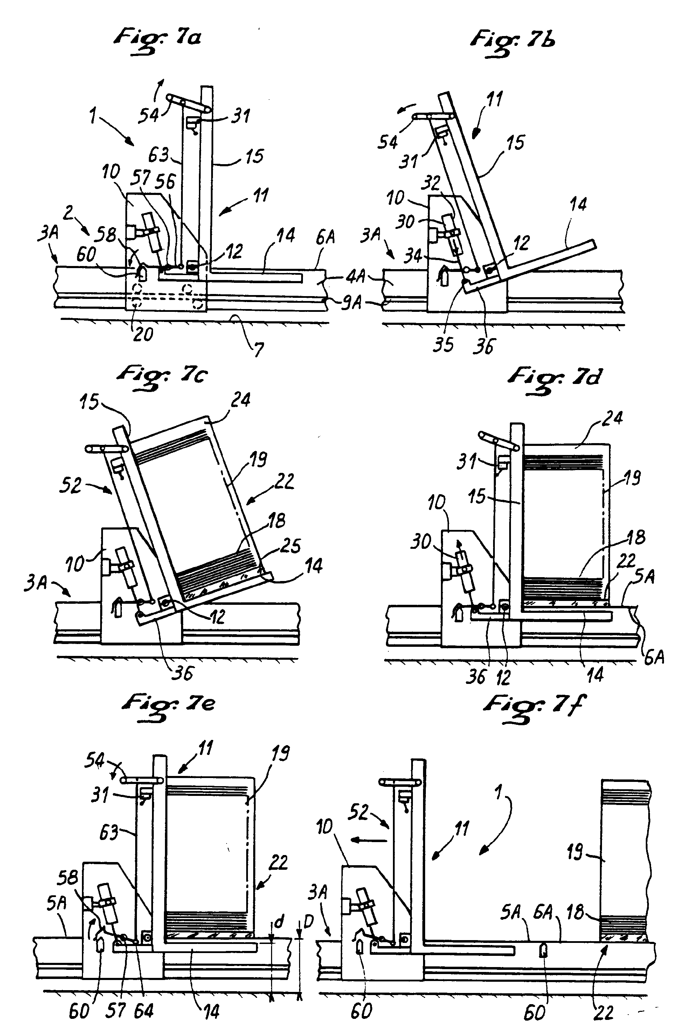

Une fois la pile 19 réalisée, figure 7d, l'opérateur agit sur la manette 43 pour l'amener dans la troisième position, ce qui permet au support 11 de basculer autour de l'axe 12 dans le sens dextrorsum vers sa première position. Le basculement du support, alors chargé de la pile 19, s'effectue lentement grâce à la vis d'étranglement 50 qui freine la rentrée de la tige 34 dans le cylindre 32 du dash-pot 30.

Avant que le support n'atteigne sa première position, la palette 22 chargée de la pile 19 se dépose sur les courroies 5A et 5B des voies de réception et de transport 3A et 3B du transporteur, puisque la distance D desdites courroies au sol 7 est supérieure à celle d de la surface d'appui 14 du support à ce même sol 7, les distances D et d étant indiquées sur la figure 7e.

En se référant à cette figure 7e, l'opérateur peut alors agir sur les moyens de verrouillage, de sorte que l'ergot de verrouillage 58 s'efface du pion 60 ce qui permet à l'opérateur de pouvoir reculer le dispositif 1. La manette de l'organe 31 est ramenée dans la première position.

L'opérateur peut alors reculer le dispositif 1, figure 7f, pour l'amener en coïncidence avec un autre pion d'indexage 60 et recommencer un nouveau cycle de fonctionnement. On voit sur cette figure la palette 22 déposée précédemment sur les voies 3A et 3B du transporteur et supportant la pile verticale 19 de flans de carton 18.

Bien que l'on ait décrit une application du dispositif pour laquelle la troisième surface d'appui est prévue sur une palette de chargement desdits produits, il va de soi que ladite troisième surface d'appui pourrait être ménagée sur le support basculant en étant pour cela orthogonale aux première et deuxième surfaces d'appui.

## Revendications

1. Dispositif pour former et transporter des piles de produits, du type comprenant :
- un socle (10) reposant sur une surface de base (7) ;
- un support (11) relié audit socle (10) autour d'un axe d'articulation horizontal (12), ledit support (11) présentant au moins des première (14) et deuxième (15) surfaces d'appui, orthogonales entre elles et contre lesquelles au moins une pile (19) desdits produits (18) est destinée à venir s'appuyer ; et
- des moyens pour le basculement (16) dudit support (11) par rapport audit socle (10) autour de l'axe d'articulation, ledit support pouvant alors occuper deux positions distinctes, une première position pour laquelle la première surface d'appui (14) est horizontale, la deuxième surface d'appui (15) étant verticale, et, une seconde position basculée, correspondant à la mise en place desdits produits (18) de façon que ceux-ci s'appuient contre les deux surfaces dudit support en formant une pile (19), caractérisé
- en ce qu'il comporte un transporteur (2) comportant deux voies de réception et de transport (3A,3B) desdites piles de produits, parallèles et espacées, entre lesquelles est susceptible de se déplacer ledit socle (10) avec le support (11) ; et
- en ce que la distance d séparant ladite surface de base et la première surface d'appui horizontale (14), lorsque ledit support occupe la première position, est inférieure à la distance D séparant ladite surface de base et lesdites voies de réception et de transport (3A,3B), de façon qu'une pile de produits, lorsque ledit support passe de ladite seconde position à la première, vienne au contact desdites voies de réception et de transport (3A,3B) légèrement avant que le support (11)retrouve sa première position.

2. Dispositif selon la revendication 1,
caractérisé en ce que, entre lesdites voies de réception et de transport (3A,3B) sont prévus des rails (9A,9B) avec lesquels coopèrent des moyens de roulement (20) montés sur ledit socle.

3. Dispositif selon la revendication 2,
caractérisé en ce que, chaque voie de réception et de transport (3A,3B) étant constituée d'un profilé (4A,4B) autour duquel peut tourner une courroie sans fin (5A,5B), chacun desdits rails (9A,9B) s'étend parallèlement le long dudit profilé correspondant (4A,4B) en y étant fixé.

4. Dispositif pour former des piles de produits, notamment en feuille ou analogue, selon l'une des revendications 1 à 3, dans lequel chacune des piles (19) est formée sur une palette (22) susceptible d'être disposée sur ladite première surface d'appui (14) dudit support, caractérisé en ce que ladite palette (22) comporte, de plus, au moins une surface d'appui (24) orthogonale à la surface de réception (25) de ladite palette, ladite surface d'appui (24) formant, lorsque la palette est disposée sur la première surface d'appui dudit support, une troisième surface d'appui orthogonale aux première (14) et deuxième (15) surfaces d'appui dudit support (11).

5. Dispositif selon l'une des revendications précédentes 1 à 4,
caractérisé en ce que lesdits moyens pour le basculement (16) dudit support (11) comprennent un dash-pot (30) relié d'une part, audit socle, et, d'autre part, audit support, et un organe de commande (31) dudit dash-pot.

6. Dispositif selon la revendication 5,
caractérisé en ce que ledit organe de commande (31) est monté sur une poignée (39) fixée à la deuxième surface d'appui (15) et comprend une vanne (42) pouvant occuper trois positions distinctes, une première position permettant le basculement du support (11) autour de l'axe d'articulation (12) provoquant l'extension dudit dash-pot (30) une deuxième position verrouillant ledit dash-pot (30) en extension et maintenant ledit support (11) basculé et une troisième position permettant la rétraction lente dudit dash-pot (30) et le basculement dudit support, chargé d'une pile de produits, de sa seconde position vers sa première position.

7. Dispositif selon l'une des revendications 1 à 6,
caractérisé en ce que l'axe d'articulation horizontal (12) dudit support par rapport audit socle est situé au voisinage de la jonction des première et deuxième surfaces d'appui.

8. Dispositif selon l'une quelconque des revendications 1 à 7,
caractérisé en ce qu'il comporte des moyens de verrouillage (52) susceptibles de coopérer avec ladite surface de base (7).

9. Dispositif selon l'une quelconque des revendications 2 à 7,
caractérisé en ce qu'il comporte des moyens de verrouillage (52) susceptibles de coopérer avec des moyens d'indexage (53) prévus le long des voies (3A,3B) dudit transporteur.

10. Dispositif selon la revendication 9,
caractérisé en ce que lesdits moyens de verrouillage (52) comprennent un levier de commande (54) monté articulé sur la deuxième surface d'appui (15) dudit support et relié, par l'intermédiaire d'une biellette (63), à au moins un bras (56) monté pivotant autour d'un axe (57) sur ledit socle (10) et présentant un ergot de verrouillage (58) susceptible de venir coopérer avec les moyens d'indexage.

11. Dispositif selon l'une des revendications 9 ou 10,
caractérisé en ce que lesdits moyens d'indexage (53) sont constitués par des pions (60) fixés à au moins l'un desdits profilés (4A,4B) du transporteur et en étant régulièrement espacés les uns des autres.

## Patentansprüche

1. Vorrichtung zum Bilden und Transportieren von Produktstapeln, die folgende Merkmale umfaßt:
- einen Grundrahmen (10), der auf einer Grundfläche (7) steht;
- einen Träger (11), der mit dem Grundrahmen (10) über eine horizontale Drehachse (12) verbunden ist, wobei der Träger (11) wenigstens eine erste (14) und eine zweite (15) Stützfläche aufweist, die rechtwinklig zueinander stehen, und wenigstens ein Stapel (19) der Produkte (18) vorgesehen ist, um sich an diesen anzulehnen; und
- Mitteln zum Rippen (16) des Trägers (11) in Bezug auf den Grundrahmen (10) um die Drehachse, wobei der Träger zwei verschiedene Stellungen einnehmen kann, eine erste Stellung, in der die erste Stützfläche (14) horizontal und die zweite Stützfläche (15) vertikal ist, sowie eine zweite gekippte, so dem Aufladen der Produkte (18) entsprechende Stellung, daß diese sich an die Stützfläche des Trägers lehnen und dabei einen Stapel (19) bilden, dadurch gekennzeichnet,
- daß sie eine Fördervorrichtung (2) aufweist, die zwei Aufnahme- und Transportschienen (3A,3B) für die Produktstapel umfaßt, die parallel und mit Abstand zueinander stehen, wobei der Grundrahmen (10) mit dem Träger (11) dazu geeignet ist, sich zwischen diesen Schienen verschieben; und
- dadurch, daß der Abstand d zwischen der Grundfläche und der ersten horizontalen Stützfläche (14) dann, wenn der Träger die erste Stellung einnimmt, kleiner ist als der Abstand D zwischen der Stützfläche und den Aufnahme- und Transportschienen (3A,3B), so daß ein Produktstapel, wenn der Träger von der zweiten zur ersten Stellung übergeht, kurz bevor der Träger (11) seine erste Stellung wieder einnimmt, mit den Aufnahme- und Transportschienen (3A,3B) in Berührung kommt.

2. Vorrichtung nach Anspruch 1 dadurch gekennzeichnet,
daß zwischen den Aufnahme- und Transportschienen (3A,3B) Fahrschienen (9A,9B) vorgesehen sind, mit denen Mittel zum Rollen (20) zusammenwirken, die am Grundrahmen montiert sind.

3. Vorrichtung nach Anspruch 2 dadurch gekennzeichnet,
daß jede Aufnahme- und Transportschiene (3A,3B) aus einem Formstahl (4A,4B) gebildet wird, um den ein Endlosriehmen (5A,5B) umlaufen kann und jede der Fahrschienen (9A,9B) sich entlang des entsprechenden Formstahls (4A,4B) erstreckt, an dem sie befestigt ist.

4. Vorrichtung zum Bilden von Produktstapeln, insbesondere aus blattförmigem oder ähnlichem Material, nach einem der Ansprüche 1 - 3, in der jeder Stapel (19) auf einer Palette (22) gebildet wird, die dazu geeignet ist, auf der ersten Stützfläche (14) des Trägers angebracht zu werden, dadurch gekennzeichnet, daß die Palette (22) außerdem wenigstens eine Stützfläche (24) umfaßt, die rechtwinklig zur Auflagefläche (25) der Palette steht, wobei die Stützfläche (24), wenn die Palette auf der ersten Stützfläche des Trägers angebracht ist, eine dritte rechtwinklig zur ersten (14) und zweiten (15) Stützfläche des Trägers (11) stehende Stützfläche bildet.

5. Vorrichtung nach einem vorhergehenden Ansprüche 1 - 4,
dadurch gekennzeichnet, daß die Mittel zum Kippen (16) des Trägers (11) einen Dämpfungszylinder (30), der einerseits mit dem Grundrahmen und andererseits mit dem Träger verbunden ist, und eine Steuervorrichtung des Dämpfungszylinders umfassen.

6. Vorrichtung nach Anspruch 5,
dadurch gekennzeichnet, daß die Steuervorrichtung (31) an einem Griffstück (39) montiert ist, das an der zweiten Stützfläche (15) befestigt ist, und daß sie ein Ventil (42) umfaßt, das drei bestimmte Stellungen einnehmen kann, eine erste Stellung, die das Kippen des Trägers (11) um die Drehachse (12) erlaubt, wobei ein Auseinanderfahren des Dämpfungszylinders (30) verursacht wird, eine zweite Stellung, die den Dämpfungszylinder (30) in seiner ausgefahrenen Position verriegelt und den Träger (11) gekippt hält, und eine dritte Stellung, die das langsame Zurückfahren des Dämpfungszylinders (30) und das Kippen des mit einem Produktstapel beladenen Trägers aus seiner zweiten Position in seine erste Stellung erlaubt.

7. Vorrichtung nach einem der Ansprüche 1 - 6,
dadurch gekennzeichnet, daß die horizontale Drehachse (12) des Trägers bezüglich des Grundrahmens in der Nähe der Verbindunsstelle der ersten und zweiten Stützfläche angebracht ist.

8. Vorrichtung nach einem der Ansprüche 1 - 7,
dadurch gekennzeichnet, daß sie Verriegelungsmittel (52) umfaßt, die geeignet sind, mit der Grundfläche (7) zusammenzuwirken.

9. Vorrichtung nach einem der Ansprüche 2 - 7,
dadurch gekennzeichnet, daß sie Verriegelungsmittel (52) umfaßt, die dazu geeignet sind, mit Einrastmitteln (53) zusammenzuwirken, die entlang der Schienen (3A,3B) der Transportvorrichtung vorgesehen sind.

10. Vorrichtung nach Anspruch 9,
dadurch gekennzeichnet, daß die Verriegelungsmittel (52) einen Steuerhebel (54) umfassen, der drehbar an der zweiten Stützfläche (15) des Trägers montiert ist und über eine Pleuelstange (63) mit wenigestens einem Arm (56), der um eine Achse (57) drehbar am Grundrahmen (10) montiert ist, und Verriegelungshaken (58) aufweist, die dazu geeignet sind, mit den Einrasmitteln zusammenzuwirken.

11. Vorrichtung nach einem der Ansprüche 9 oder 10.
dadurch gekennzeichnet, daß die Einrastmittel (53) durch Klötzchen (60) gebildet werden, die an wenigstens einem der Formstähle (4A,4B) der Fördervorrichtung befestigt sind und sich in regelmäßigem Abstand zueinander befinden.

## Claims

1. Apparatus for forming and conveying stacks of products, of the type comprising:
- a pedestal (10) resting on a base surface (7);
- a support (11) connected to said pedestal (10) about a horizontal pivot axis (12), said support (11) having at least first (14) and second (15) support surfaces which are at right angles to one another and against which at least one stack (19) of said products (18) is intended to come to bear; and
- means for tipping (16) said support (11) relative to said pedestal (10) about the pivot axis, said support then being able to assume two different positions, namely a first position in which the first support surface (14) is horizontal while the second support surface (15) is vertical, and a second, tipped position corresponding to the placing in position of said products (18) in such a manner that they are supported against the two surfaces of said support so as to form a stack (19), characterised:
- in that it comprises a conveyor (2) comprising two tracks (3A, 3B) for the reception and conveying of said stacks of product, parallel and spaced apart, between which tracks said pedestal (10) together with the support (11) is movable, and
- in that the distance d separating said base surface from the first horizontal support surface (14), when said support is in the first position, is shorter than the distance D separating said base surface from said reception and conveying tracks (3A, 3B), in such a manner that, when said support passes from said second position to the first, a stack of products comes into contact with said reception and conveying tracks (3A, 3B) shortly before the support (11) regains its first position.

2. Apparatus according to Claim 1, characterised in that between said reception and conveying tracks (3A, 3B) rails (9A, 9B) are provided, with which running means (20) mounted on said pedestal cooperate.

3. Apparatus according to Claim 2, characterised in that, each reception and conveying track (3A, 3B) being composed of a sectional member (4A, 4B) around which an endless belt (5A, 5B) can turn, each of said rails (9A, 9B) extends parallel along the corresponding sectional member (4A, 4B), being fixed thereto.

4. Apparatus for forming stacks of products, particularly in sheet or like form, according to one of Claims 1 to 3, in which each of the stacks (19) is formed on a pallet (22) capable of being disposed on said first support surface (14) of said support, characterised in that said pallet (22) comprises in addition at least one support surface (24) at right angles to the reception surface (25) of said pallet, said support surface (24) forming, when the pallet is disposed on the first support surface of said support, a third support surface at right angles to the first (14) and second (15) support surfaces of said support (11).

5. Apparatus according to one of the preceding Claims 1 to 4, characterised in that said means for tipping (16) said support (11) comprise a dashpot (30) connected on the one hand to said pedestal and on the other hand to said support, and a control means (31) for said dashpot.

6. Apparatus according to Claim 5, characterised in that said control means (31) is mounted on a handle (39) fixed to the second support surface (15) and comprises a valve (42) capable of assuming three different positions, a first position permitting the tipping of the support (11) about the pivot axis (12) and thus effecting the extension of said dashpot (30), a second position locking said dashpot (30) in its extended position and holding said support (11) in the tipped position, and a third position permitting the slow retraction of said dashpot (30) and the tipping of said support carrying a stack of products from its second position to its first position.

7. Apparatus according to one of Claims 1 to 6. characterised in that the horizontal pivot axis (12) of said support relative to said pedestal is situated near the junction of the first and second support surfaces.

8. Apparatus according to any one of Claims 1 to 7, characterised in that it comprises locking means (52) capable of cooperating with said base surface (7).

9. Apparatus according to any one of Claims 2 to 7, characterised in that it comprises locking means (52) capable of cooperating with indexing means (53) provided along the tracks (3A, 3B) of said conveyor.

10. Apparatus according to Claim 9, characterised in that said locking means (52) comprise a control lever (54) pivotally mounted on the second support surface (15) of said support and connected by means of a connecting rod (63) to at least one arm (56) mounted for pivoting about an axis (57) on said pedestal (10) and having a locking catch (58) capable of cooperating with the indexing means.

11. Apparatus according to one of Claims 9 or 10, characterised in that said indexing means (53) consist of studs (60) fixed to at least one of said sectional members (4A, 48) of the conveyor and regularly spaced in relation to one another.
